# EUROPEAN PATENT SPECIFICATION

(11) **EP 2 498 420 B1**
(45) Date of publication and mention of the grant of the patent: **23.08.2017**
(21) Application number: 11290125.1
(22) Date of filing: 11.03.2011
(51) Int. Cl.: H04B 10/07, H04L 5/00, H04J 14/02, H04B 10/079

(54) **Method for operating optical data transmission links, optical data transmission system and control unit**
Verfahren zum Betrieb von optischen Datenübertragungsverbindungen, optisches Datenübertragungssystem und Steuerungseinheit
Procédé pour le fonctionnement de liens de transmission de données optiques, système de transmission de données optiques et unité de contrôle

(43) Date of publication of application: 12.09.2012
(73) Proprietor: ALCATEL LUCENT, 92100 Boulogne-Billancourt (FR)
(72) Inventor: Krimmel, Heinz-Georg, 70825 Korntal-Münchingen (DE)
(74) Representative: Wetzel, Emmanuelle

(56) References cited:
- EP-A2- 0 849 893
- WO-A2-03/049350
- US-A1- 2003 179 769
- US-A1- 2008 095 539
- US-B1- 7 522 846

## Description

The invention relates to a method for concurrently operating several optical data transmission links, to an optical data transmission system, and to a control unit therfor.

The problem leading to this invention arose in the field of so called passive optical networks in the access area, normally abbreviated PON. Similar problems might arise in other fields too, where then the solution found here could be used as well. Anyway problem and solution here will be described in terms of PONs.

Such networks are point-to-multipoint networks with a central office at the single end and a multiple of subscriber devices at the multiple ends. The optical beat interference problem dealt with here arises from more than one optical source sending optical waves in upstream direction at the same time towards a single shared receiver. It can be avoided by allowing only one source emitting at a time, which is known as time-division-multiple-access, TDMA. For other multiple access schemes several optical sources can be active at the same time, for instance with a subcarrier multiplexing scheme.

The thus given optical carriers are modulated with signals that are processed in the electrical sphere as OFDMA signals (OFDMA = orthogonal frequency division multiple access). The reception in a joint receiver makes the detected signal prone to interference that arises from the mixing of optical waves with a beat frequency well within the passband of the electrical part of the receiver. The origin of such interference is the nonlinearity of receiver diodes, normally photo diodes, that result in beat interference between signals with neighboring wavelengths. Photodiodes are producing as electrical output the lowpass filtered square of the incident optical fields.

In keeping the gap between two neighboring wavelengths broad enough of course such interference can be kept as low as wanted if the difference frequency falls outside the electrical passband.

Keeping a predefined gap between two wavelengths either results in the need for costly lasers or in the need to regulate the temperature of the lasers precisely and moreover with a high expenditure of energy. In times of green technology this alone is a major drawback.

It is therefore an object of the invention to cope with this problem.

The document US2008/0095539 A1 discloses a system, in which an operator is able to individually control the power level of each communication channel in the network. The operator can adjust each transmitter separately to overcome the variability and the optical output power of the transmitter, the flatness of the WDM component, EDFA flatness, dispersion of the fibre, etc. Document EP-A-0 849 893 discloses a system that monitors for signal interference in an optical transmission system and which reduces the respective signal power when such interference is detected. The object according to the invention is achieved by a method for concurrently operating several optical data transmission links using different independent optical wavelengths via a common medium with a common receive side, in which on occurrence of symptoms for failures of either of the transmission links it is checked, whether signal quality degradation by interfering optical wavelengths occurs, wherein on occurrence of such symptoms it is checked whether occurring errors are results of such interference and which are the interfering transmission links, and wherein with at least one of the interfering transmission links the operation parameters except for the wavelengths are changed wherein the change includes a reduction of transmit power to reach reduced receive power levels at the receive side, and a reduced transfer rate to adapt to a resulting signal quality reduction. This object according to the invention further is achieved by an optical data transmission system for concurrently operating several optical data transmission links using different independent optical wavelengths via a common medium with a common receive side, in which first measuring equipment is present for checking whether signal quality degradation by interfering optical wavelengths occurs, wherein second measuring equipment is present for checking whether occurring errors are results of such interference and which are the interfering transmission links, and that granting means are present for changing with at least one of the interfering transmission links the operation parameters except for the wavelengths wherein such change includes
a reduction of transmit power to reach reduced receive power levels at the receive side, and a reduced transfer rate to adapt to a resulting signal quality reduction. The invention is based on the fact, that there are other operating parameters than the wavelength that can be used to reduce interference.

Further embodiments of the invention are to be found in the subclaims and in the following description.

In the following the invention will be described with the aid of the accompanying drawings, in which:

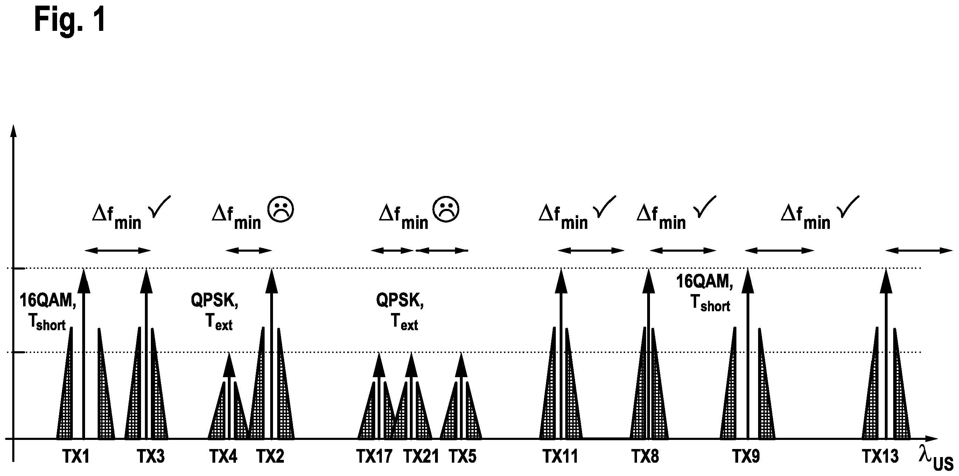

- Figure 1: shows the multiple sources upstream spectrum on an optical transmission link of an optical data transmission system according to the invention operated by a method according to the invention.

The spectrum shown in figure 1 is an idealized spectrum at the upstream end of the common medium, being the common receive side. We see the shares of the spectrum coming from a couple of different transmitters at the other ends. These shares here carry the designation of the respective transmitters TX1, TX2, ... actually being active. Suitable control loops are provided to operate the respective transmitters such that under undisturbed conditions at the common receive end a common receive level should be reached.

When allowing the transmitters to freely run their transmit sources, normally laser sources, over varying temperature ranges, one can not exclude that at least some of their wavelengths approach one another to an extend that secure operation of the whole equipment at the receive end is no longer guaranteed. In the shown example this is the case with the spectra of the pairs TX4/TX2, TX17/TX21, and TX21/TX5. In the figure this is represented by the signs and arrows above the spectrum.

One possibility of resolving such interference is not shown in this figure, and of course this would be the first one chosen, namely to dissolve the interference in time by granting time slots that do not overlap or moreover are far from one another.

This may, however, be not possible for signals that need continuous transfer. Shifting the emission wavelength of one our both partners of course would eliminate the impact of the generated beat interference within the electrical spectrum. However, in view of the above mentioned drawback this should not be the first remedy considered.

A more suited remedy is the reduction of the transmit power level in order to reach reduced receive power levels at the receive end here under consideration. The power level here is simply represented by the heights of the respective share of the spectrum. It may be sufficient to reduce the power level of one of the interfering spectra, as with the pair TX4/TX2, or with both, as with the pairs TX17/TX21, and TX21/TX5.

Reducing the transmit power often will result in the need to also reduce the transfer rate, here represented by the modulation schemes 16QAM, and QPSK to adapt to the resulting signal quality reduction. Such disadvantage can be compensated for by granting longer time intervals, here Tshort and Text for T_short and T_extended.

Slighter reductions in transmit power could be compensated for by adding some more redundancy to give the possibility to correct transmission errors by means of a forward error correction.

As there are lots of possible applications that are not real-time applications, in principle an increase of bit error ratio with consequent re-transmissions could be allowed. This however would be a very unwanted or even impermissible measure.

Before dealing with the interference of course first it is to be checked, whether occurring errors are results of such interference, and which are the interfering transmission links or channels.

On the one hand, occurring transmission errors anyway are being analyzed in the receiver, wherefrom also errors by interference are being determined.

In addition the spectra of the incoming signals could be identified directly with acceptable effort to therefrom determine occurring beat frequencies.

On the other hand anyway existing control units, in the access area called scheduler, know at least coincident transmissions and can easily interrupt or shift either of them to find out, whether the interference continues or not.

Having understood how the operation of such several optical data transmission links or channels occurs according to the invention, it is self-evident to the man in the art to also built respective equipment like an optical data transmission system, an optical access area, or a control unit or scheduler therefor.

## Claims

1. Method for concurrently operating several optical data transmission links using different independent optical wavelengths via a common medium with a common receive side, **wherein** on occurrence of symptoms for failures of either of the transmission links it is checked, whether signal quality degradation by interfering optical wavelengths occurs, wherein on occurrence of such symptoms it is checked whether occurring errors are results of such interference and which are the interfering transmission links, and wherein with at least one of the interfering transmission links the operation parameters except for the wavelengths are changed,
wherein such change includes
- a reduction of transmit power to reach reduced receive power levels at the receive side, **characterized by** a reduced transfer rate to adapt to a resulting signal quality reduction.

2. Method according to claim 1, **characterized in, that**, in order to cope with a reduced quality of either of the involved transmission links as a consequence of changed operating parameters at least in part a compensation is granted.

3. Optical data transmission system for concurrently operating several optical data transmission links using different independent optical wavelengths via a common medium with a common receive side, **wherein** first measuring equipment is present for checking whether signal quality degradation by interfering optical wavelengths occurs, wherein second measuring equipment is present for checking whether occurring errors are results of such interference and who are the interfering transmission links, and that granting means are present for changing with at least one of the interfering transmission links the operation parameters except for the wavelengths,
wherein such change includes
- a reduction of transmit power to reach reduced receive power levels at the receive side,
- **characterized by** a reduced transfer rate to adapt to a resulting signal quality reduction.

## Patentansprüche

1. Verfahren zum gleichzeitigen Betreiben von mehreren optischen Datenübertragungsstrecken, die verschiedene unabhängige optische Wellenlängen benutzen mittels eines gemeinsamen Mediums mit einer gemeinsamen Empfangsseite, wobei bei Auftreten von Fehlersymptomen bei einer beliebigen der Übertragungsstrecken überprüft wird, ob eine Signalqualitätsverschlechterung durch Interferenz optischer Wellenlängen auftritt, wobei bei Auftreten solcher Symptome überprüft wird, ob die auftretenden Fehler Ergebnisse einer solchen Interferenz sind und welche die interferierenden Übertragungsstrecken sind, und wobei für mindestens eine der interferierenden Übertragungsstrecken die Betriebsparameter mit Ausnahme der Wellenlängen geändert werden, wobei eine solche Änderung umfasst
- eine Reduzierung der Übertragungsleistung zum Erreichen reduzierter Empfangsleistungspegel auf der Empfangsseite, durch eine reduzierte Übertragungsrate gekennzeichnet zum Anpassen an eine resultierende Signalqualitätsreduzierung.

2. Verfahren nach Anspruch 1, **dadurch gekennzeichnet, dass**, um mit einer reduzierten Qualität einer beliebigen der involvierten Übertragungsstrecken als Folge von geänderten Betriebsparametern fertig zu werden, mindestens teilweise eine Kompensation garantiert wird.

3. Optisches Datenübertragungssystem zum gleichzeitigen Betreiben von mehreren optischen Datenübertragungsstrecken, die verschiedene unabhängige optische Wellenlängen benutzen mittels eines gemeinsamen Mediums mit einer gemeinsamen Empfangsseite, wobei erste Messgeräte vorhanden sind zum Überprüfen, ob eine Signalqualitätsverschlechterung durch Interferenz optischer Wellenlängen auftritt, wobei zweite Messgeräte vorhanden sind zum Überprüfen, ob die auftretenden Fehler Ergebnisse einer solchen Interferenz sind und welche die interferierenden Übertragungsstrecken sind, und dass Garantiemittel vorhanden sind zum Ändern an mindestens einer der interferierenden Übertragungsstrecken der Betriebsparameter mit Ausnahme der Wellenlängen,
wobei eine solche Änderung umfasst
- eine Reduzierung der Übertragungsleistung zum Erreichen reduzierter Empfangsleistungspegel auf der Empfangsseite,
- durch eine reduzierte Übertragungsrate gekennzeichnet zum Anpassen an eine resultierende Signalqualitätsreduzierung.

## Revendications

1. Procédé d'exécution simultanée de plusieurs liaisons de transmission de données optiques en utilisant différentes longueurs d'onde optiques indépendantes par l'intermédiaire d'un support commun ayant un côté de réception commun, dans lequel en cas de symptômes de défaillances de l'une quelconque des liaisons de transmission, on vérifie si une dégradation de la qualité de signal par des longueurs d'onde optique interférentes se produit, dans lequel, si de tels symptômes se produisent, on vérifie que des erreurs qui se produisent sont les résultats de cette interférence et quelles sont les liaisons de transmission interférentes, et dans lequel avec au moins une des liaisons de transmission interférentes les paramètres de fonctionnement sont modifiés, à l'exception des longueurs d'onde, dans lequel une telle modification comprend
- une réduction d'une puissance d'émission pour atteindre des niveaux de puissance de réception réduits au niveau du côté de réception, **caractérisé par** un débit de transfert réduit pour s'adapter à une réduction de la qualité de signal résultante.

2. Procédé selon la revendication 1, **caractérisé en ce que**, afin de gérer une qualité réduite de l'une quelconque des liaisons de transmission impliquées en raison de paramètres de fonctionnement modifiés, une compensation est accordée au moins en partie.

3. Système optique de transmission de données d'exécution simultanée de plusieurs liaisons de transmission de données optiques en utilisant différentes longueurs d'onde optiques indépendantes par l'intermédiaire d'un support commun ayant un côté de réception commun, dans lequel un premier équipement de mesure est présent pour vérifier si une dégradation de la qualité de signal par des longueurs d'onde optique interférentes se produit, dans lequel un deuxième équipement de mesure est présent pour vérifier si des erreurs qui se produisent sont les résultats d'une telle interférence et quelles sont les liaisons de transmission interférentes, et que des moyens d'attribution sont présents pour modifier avec au moins une des liaisons de transmission interférentes les paramètres de fonctionnement, à l'exception des longueurs d'onde,
dans lequel une telle modification comprend
- une réduction d'une puissance d'émission pour atteindre des niveaux de puissance de réception réduits au niveau du côté de réception,
- **caractérisé par** un débit de transfert réduit pour s'adapter à une réduction de la qualité de signal résultante.
